# EUROPÄISCHE PATENTSCHRIFT

(11) **EP 2 905 346 B1**
(45) Veröffentlichungstag und Bekanntmachung des Hinweises auf die Patenterteilung: **02.09.2020**
(21) Anmeldenummer: 14175262.6
(22) Anmeldetag: 01.07.2014
(51) Int. Cl.: C21D 1/673, B21D 22/02, B21D 22/20, B62D 29/00

(54) **Wärmebehandlungsverfahren**
Heat treatment process
Procede de traitement de la chaleur

(30) Priorität: 23.01.2014 DE 102014201259; 26.05.2014 EP 14169893
(43) Veröffentlichungstag der Anmeldung: 12.08.2015
(73) Patentinhaber: Schwartz GmbH, 52152 Simmerath (DE)
(72) Erfinder: Winkel, Jörg, 52385 Nideggen-Schmidt (DE); Wilden, Frank, 52152 Simmerath (DE)
(74) Vertreter: Keenway Patentanwälte Neumann Heine Taruttis

(56) Entgegenhaltungen:
- EP-A1- 2 143 808
- EP-A1- 2 182 082
- EP-A1- 2 497 840
- EP-A1- 2 548 975
- EP-A1- 2 767 599
- EP-A2- 2 365 100
- AT-A4- 509 596
- DE-B3-102007 057 855
- DE-B3-102012 110 649

## Beschreibung

Die Erfindung betrifft ein Verfahren zur gezielten bauteilzonenindividuellen Wärmebehandlung von Blechbauteilen.

In der Technik besteht bei vielen Anwendungsfällen in unterschiedlichen Branchen der Wunsch nach hochfesten Metallblechteilen bei geringem Teilegewicht.

Beispielsweise ist es in der Fahrzeugindustrie das Bestreben, den Kraftstoffverbrauch von Kraftfahrzeugen zu reduzieren und den CO2-Ausstoß zu senken, dabei aber gleichzeitig die Insassensicherheit zu erhöhen. Es besteht daher ein stark zunehmender Bedarf an Karosseriebauteilen mit einem günstigen Verhältnis von Festigkeit zu Gewicht. Zu diesen Bauteilen gehören insbesondere A- und B-Säulen, Seitenaufprallschutzträger in Türen, Schweller, Rahmenteile, Stoßstangenfänger, Querträger für Boden und Dach, vordere und hintere Längsträger. Bei modernen Kraftfahrzeugen besteht die Rohkarosse mit einem Sicherheitskäfig üblicherweise aus einem gehärteten Stahlblech mit ca. 1.500MPa Festigkeit. Dabei werden vielfach Al-Si-beschichtete Stahlbleche verwendet. Zur Herstellung eines Bauteils aus gehärtetem Stahlblech wurde der Prozess des so genannten Presshärtens entwickelt. Dabei werden Stahlbleche zuerst auf Austenittemperatur zwischen 850°C und 950°C erwärmt, dann in ein Pressenwerkzeug gelegt, schnell geformt und durch das wassergekühlte Werkzeug zügig auf Martensittemperatur von ca. 250°C abgeschreckt. Dabei entsteht hartes, festes Martensitgefüge mit ca. 1.500MPa Festigkeit. Ein solcherart gehärtetes Stahlblech weist aber nur ca. 6-8% Bruchdehnung auf, was in speziellen Bereichen im Falle des Zusammenstoßes zweier Fahrzeuge, besonders beim Seitenaufprall, nachteilig ist. Die kinetische Energie des eindringenden Fahrzeugs kann dabei nicht in Verformungswärme umgesetzt werden. Vielmehr wird in diesem Fall das Bauteil spröd brechen und droht zusätzlich die Insassen zu verletzen.

Für die Automobilindustrie ist es daher wünschenswert, Karosseriebauteile zu erhalten, die mehrere unterschiedliche Dehnungs- und Festigkeitszonen im Bauteil aufweisen, so dass sehr feste Bereiche einerseits und sehr dehnfähige Bereiche andererseits in einem Bauteil vorliegen. Dabei sollten die allgemeinen Ansprüche an eine Produktionsanlage weiterhin beachtet sein: so sollte es zu keiner Taktzeiteinbuße an der Form-Härteanlage kommen, die Gesamtanlage sollte uneingeschränkt allgemein verwendet und schnell kundenspezifisch umgerüstet werden können. Der Prozess sollte robust und wirtschaftlich sein und die Produktionsanlage nur minimalen Platz benötigen. Die Form und Kantengenauigkeit des Bauteils sollte so hoch sein, dass Hartbeschnitt weitgehend entfallen kann, um Material und Arbeit einzusparen.

Zur Erzeugung eines Bauteils mit Bereichen unterschiedlicher Härte und Duktilität können unterschiedliche Stähle miteinander verschweißt werden, so dass nicht härtbarer Stahl in den weichen und härtbarer Stahl in den harten Zonen vorliegt. Bei einem anschließenden Härteprozess kann das gewünschte Härteprofil über dem Bauteil erreicht werden. Die Nachteile dieses Verfahrens liegen in der gelegentlich unsicheren Schweißnaht bei einem üblicherweise für Karosserieteile verwendeten Al-Si-beschichteten ca. 0,8-1,5mm dicken Blech, des dortigen schroffen Härteübergangs sowie in den wegen des zusätzlichen Fertigungsschritts des Verschweißens erhöhten Kosten des Bleches. In Tests kam es gelegentlich zu Ausfällen durch Bruch in der Nähe der Schweißnaht, so dass der Prozess nicht als robust bezeichnet werden kann. Darüber hinaus sind dem Prozess bei komplexen Geometrien Grenzen gesetzt.

Aus der deutschen Patentschrift DE 10 2007 057 855 B3 ist ein Verfahren bekannt, bei dem ein Formbauteil in Form einer aus einem Bandmaterial mit einer AlSi-Beschichtung versehenen hochfesten Borstahl abgetrennten Platine zunächst komplett homogen auf eine solche Temperatur erwärmt und über eine bestimmte Zeit auf diesem Temperaturniveau gehalten wird, dass sich eine Diffusionsschicht als Korrosions- beziehungsweise Zunderschutzschicht bildet, wobei Material aus der Beschichtung in den Grundwerkstoff eindiffundiert. Die Erwärmungstemperatur beträgt dabei etwa 830°C bis 950°C. Diese homogene Erwärmung wird in einer ersten Zone eines mehrere Temperaturzonen aufweisenden Durchlaufofens durchgeführt. Im Anschluss an diesen Verfahrensschritt wird ein Bereich erster Art der Platine in einer zweiten Zone des Ofens auf eine Temperatur heruntergekühlt, bei der Austenit zerfällt. Dies erfolgt bei etwa 550°C bis 700°C. Dieses abgesenkte Temperaturniveau wird für eine bestimmte Zeit gehalten, so dass der Zerfall von Austenit einwandfrei abläuft. Gleichzeitig mit dem lokalen Abkühlen des Bereichs erster Art der Platine wird in einer dritten Zone des Ofens in wenigstens einem Bereich zweiter Art die Temperatur gerade so hoch gehalten, dass bei dem sich anschließenden Warmumformen in einer entsprechenden Presse noch ausreichend Martensitanteile entstehen können. Diese Temperatur liegt bei 830°C bis 950°C. Beim Abkühlen des Bereichs erster Art kann dieser Bereich der Platine kurzzeitig mit Kühlbacken in Kontakt gebracht werden.

Mit diesem Verfahren ist es allerdings nur möglich, relativ einfache und großflächige Geometrien mit üblicherweise nur zwei unterschiedlichen Bereichen einer unterschiedlichen Wärmebehandlung zu unterziehen. Komplexe Geometrien, wie beispielsweise nahezu beliebig im Raum geformte duktile Punkt-Schweißränder einer ansonsten mit hoher Härte versehenen B-Säule, lassen sich mit diesem Verfahren nicht entsprechend wärmebehandeln. Darüber hinaus müssen die Temperaturen der einzelnen Zonen des Ofens sehr genau geregelt sein, wobei Durchlauföfen andererseits aus wirtschaftlichen Gründen üblicherweise mit Gasbrennern geheizt werden, womit sich allerdings die Temperaturen der einzelnen Zonen nicht mit der erforderlichen Genauigkeit auf einfache und günstige Weise regeln lassen.

Aus der europäischen Offenlegungsschrift EP 2 497 840 A1 ist ein Ofensystem und ein Verfahren zur gezielten bauteilzonenindividuellen Wärmebehandlung von Blechbauteilen bekannt. Das Ofensystem weist einen üblichen, universellen Produktionsofen zum Erwärmen der Stahlblechteile auf eine Temperatur nahe, aber unterhalb der AC3-Temperatur, das heißt der Temperatur, bei der die Umwandlung des Ferrits in Austenit endet, auf, wobei das Ofensystem weiterhin einen Profilierofen mit mindestens einer Ebene aufweist. Die mindestens eine Ebene verfügt über ein Ober- und ein Unterteil, sowie einen in eine entsprechende Aufnahme eingebrachten produktspezifischen Zwischenflansch, wobei der produktspezifische Zwischenflansch dazu ausgebildet ist, dem Bauteil ein vorgegebenes Temperaturprofil mit Temperaturen über der AC3-Temperatur für zu härtende Bereiche und unter der AC3-Temperatur für weichere Bereiche aufzuprägen. Das Aufprägen des Temperaturprofils geschieht dabei mittels Wärmestrahlung. Da das Verfahren vorsieht, die Bauteile in dem Produktionsofen nur auf eine Temperatur unterhalb der AC3-Temperatur aufzuheizen und die Wärme für die Aufheizung definierter Bereiche auf eine Temperatur oberhalb der AC3-Temperatur in einem späteren Prozessschritt in dem Profilierofen einzubringen, ist eine sehr genaue Temperaturregelung im Produktionsofen nicht erforderlich, so dass der Nachteil der schlechteren Regelbarkeit von Gasbrennern gegenüber der von elektrischen Heizungen zugunsten der Wirtschaftlichkeit für den günstigeren Energieträger Gas in Kauf genommen werden kann. Der Nachteil dieses Verfahrens ist, dass die Bereiche unterschiedlicher Temperatur nicht exakt trennbar sind. Darüber geschieht der Wärmeaustausch über Strahlung relativ langsam, so dass mehrere Profilieröfen parallel betrieben werden müssen, um die mögliche Kapazität des Durchlaufofens ausnutzen zu können.

Aus der deutschen Offenlegungsschrift DE 10 2012 102 194 A1 ist eine Ofenanlage sowie ein Verfahren zum Betreiben einer Ofenanlage bekannt, wobei innerhalb der Ofenanlage eine Strahlungswärmequelle angeordnet ist und ein metallisches Bauteil innerhalb der Ofenanlage mit zwei voneinander verschiedenen Temperaturbereichen thermisch behandelbar ist. Weiterhin wird in der Ofenanlage in einem zweiten Bereich ein Luftstrom umgewälzt, mit dem ein zweiter Temperaturbereich aufgrund von erzwungener Konvektion thermisch behandelt wird. Dabei wird der erste Bereich des metallischen Bauteils mittels Strahlungswärme auf mindestens AC3 erwärmt und/oder in seiner Temperatur auf mindestens AC3 gehalten wird und dass der zweite Bereich durch Konvektion von einer Temperatur von mindestens AC3 auf eine Temperatur unter AC3 gekühlt wird oder dass der zweite Bereich durch Konvektion auf eine Temperatur unter AC3 erwärmt wird, wobei die dabei entstehenden unterschiedlichen Temperaturzonen durch eine Trennvorrichtung thermisch voneinander separiert werden. Dabei ist es schwierig, die Temperaturbereiche im Ofen voneinander thermisch zu trennen. Die Trennvorrichtung muss der Kontur des metallischen Bauteils angepasst werden, um eine effektive Temperaturtrennung zu ermöglichen. Dadurch ist der Ofen nur nach einer Umrüstung für andere Bauteilgeometrien einsetzbar, wobei eine Ofenumrüstung durch die Größe des Ofens, insbesondere die Größe eines Rollenherdofens, aufwändig ist.

Aufgabe der Erfindung ist es, ein Verfahren zur gezielten Wärmebehandlung von Blechbauteilen bereitzustellen, wobei die oben beschriebenen Nachteile minimiert sind.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2 und 3.

Das erfinderische Verfahren zur Aufprägung eines Temperaturprofils auf ein Stahlblechbauteil, wobei dem Stahlblechbauteil in einem oder mehreren ersten Bereichen eine Temperatur unterhalb der AC3-Temperatur und ein einem oder mehreren zweiten Bereich eine Temperatur oberhalb der AC3-Temperatur aufprägbar ist, ist dadurch gekennzeichnet, dass das Stahlblechbauteil (200) zunächst in einem Produktionsofen auf eine Temperatur oberhalb der AC3-Temperatur aufgeheizt wird, das Stahlblechbauteil anschließend in eine thermische Nachbehandlungsstation transferiert wird, wobei es während des Transfers auf eine Temperatur unterhalb der AC3-Temperatur abkühlen kann, und in der Nachbehandlungsstation wahlweise die ein oder mehreren ersten Bereiche des Stahlblechbauteils auf einer Temperatur unterhalb der AC3-Temperatur gehalten oder weiter abgekühlt werden und die ein oder mehreren zweiten Bereiche des Stahlblechbauteils auf eine Temperatur oberhalb der AC3-Temperatur aufgeheizt werden. Dabei ist es verfahrenstechnisch leicht, das gesamte Stahlblechbauteil, das eine im Wesentlichen ebene Stahlblechplatine oder auch ein räumlich ausgedehntes Stahlblechbauteil oder Stahlblechprofil sein kann, auf eine Temperatur oberhalb der AC3-Temperatur aufzuheizen. Die AC3-Temperatur ist eine von dem für das Stahlblechbauteil verwendeten Werkstoff abhängige Temperatur, beispielsweise 873°C. Bei dem Transfer in die thermische Nachbehandlungsstation kühlt das Stahlblechbauteil über natürliche Konvektion an der Umgebungsluft ab. Wurde das Stahlblechbauteil im Produktionsofen nur auf die AC3-Temperatur beziehungsweise nur auf eine Temperatur kurz oberhalb der AC3-Temperatur aufgeheizt, kühlt es sich bei dem Transfer auf eine Temperatur unterhalb der AC3-Temperatur ab. In der thermischen Nachbehandlungsstation wird nun dem zweiten Bereich eine Temperatur oberhalb der AC3-Temperatur aufgeprägt, während der erste Bereich weiter heruntergekühlt wird oder er zumindest auf seiner Temperatur nach dem Transfer gehalten wird. Selbstverständlich kann das Stahlblechbauteil mehrere erste und zweite Bereiche aufweisen. Das mit einem Temperaturprofil versehene Stahlblechbauteil kann anschließend dem Presswerkzeug zugeführt und dort pressgehärtet werden.

Der erste Bereich, die im fertigen Bauteil eine große Duktilität aufweisen soll, wird auf eine Rekristallisationstemperatur unterhalb der AC3-Temperatur abgekühlt, während ein zweiter Bereich, der im fertigen Bauteil eine besonders große Härte aufweisen soll, auf einer Temperatur oberhalb der AC3-Temperatur gehalten beziehungsweise wieder aufgeheizt wird. Dabei geschieht die Abkühlung von der durch den Produktionsofen aufgeprägten Temperatur oberhalb AC3 während des Transfers des Stahlblechbauteils vom Produktionsofen in die thermische Nachbehandlungsstation beziehungsweise in der thermischen Nachbehandlungsstation so langsam, dass sich das Gefüge umkristallisieren kann. Die AC3-Temperatur ist ebenso wie die Rekristallisationstemperatur Legierungsabhängig. Bei den üblicherweise für Fahrzeugkarosseriebauteile eingesetzten Materialien liegt die AC3-Temperatur bei circa 870°C, während die Rekristallisationstemperatur, bei welcher sich Ferrit-Perlitgefüge einstellt, bei circa 800°C liegt.

Werden beschichtete Stahlblechbauteile verarbeitet, bei denen die Beschichtung wie beispielsweise bei AlSi-beschichteten Stahlblechen mit dem Substrat legiert, kann das Stahlblechbauteil in dem Produktionsofen auch auf Diffusionstemperatur von beispielsweise 950°C aufgeheizt werden.

Der Produktionsofen muss bei dem erfinderischen Verfahren nicht der Geometrie des zu behandelnden Stahlblechbauteils angepasst werden, insbesondere muss keine bauteilgeometrieabhängige Trennvorrichtung in dem Ofen vorgesehen werden. Es kann im Gegenteil ein Standardofen eingesetzt werden, der bei einem Produktionswechsel nicht umgerüstet werden muss. Insbesondere kann ein standardmäßiger Rollenherdofen eingesetzt werden. Die Regelung der Ofentemperatur stellt keine erhöhten Qualitätsanforderungen, da das gesamte Stahlblechbauteil auf eine Temperatur oberhalb der AC3-Temperatur aufgeheizt wird. Aus wirtschaftlichen Gründen ist es wünschenswert, dabei die AC3-Temperatur möglichst wenig zu überschreiten, wobei es aus verfahrenstechnischen Gründen durchaus möglich ist, die AC3-Temperatur auch um eine größere Abweichung, beispielsweise mehrere Dekaden Grad zu überschreiten.

In einer vorteilhaften Ausführungsform werden die ein oder mehreren ersten Bereiche des Stahlblechbauteils in der thermischen Nachbehandlungsstation mittels Konvektion gekühlt. Dabei kann es sich um natürliche oder erzwungene Konvektion handeln. Beispielsweise kann der erste Bereich des Stahlblechbauteils jeweils mit einem Gasstrom gezielt angeströmt werden, der kälter ist als die Temperatur dieses Bereichs des Stahlblechbauteils zu Beginn seines Transfers in die thermische Nachbehandlungsstation. Bei dem Gasstrom kann es sich um einen Gasstrom mit einer der Umgebungsluft entsprechenden Zusammensetzung handeln. Es kann aber auch ein anderes Gas, beispielsweise ein Inertgas, eingesetzt werden. Der Gasstrom kann in einer Gebläsevorrichtung erzeugt werden, wobei die Gebläsevorrichtung innerhalb oder auch außerhalb der thermischen Nachbehandlungsstation angeordnet sein kann. Alternativ können die ein oder mehreren ersten Bereiche des Stahlblechbauteils in der thermischen Nachbehandlungsstation auch mittels Strahlung oder mittels Wärmeleitung gekühlt werden. Auch eine Kombination aller oder einiger der Kühlmöglichkeiten ist denkbar. Dabei kann für die Ableitung von Wärme aus dem Stahlblechbauteil mittels Strahlung eine wärmestrahlungsabsorbierende Fläche an entsprechender Stelle in einer Kühleinrichtung vorgesehen werden. Für die Wärmeabfuhr mittels Wärmeleitung kann eine Fläche an entsprechender Stelle in einer Kühleinrichtung vorgesehen werden, die mit jedem der ein oder mehreren ersten Bereiche des Stahlblechbauteils zumindest teilweise in Kontakt bringbar ist.

Es hat sich als vorteilhaft erwiesen, wenn die ein oder mehreren zweiten Bereiche des Stahlblechbauteils in der thermischen Nachbehandlungsstation mittels Strahlung aufgeheizt werden. Als Strahlungsquelle bieten sich elektrische oder mit Brennstoffen wie beispielsweise Gas oder Öl betriebene Infrarotstrahler an. Alternativ können die ein oder mehreren zweiten Bereiche des Stahlblechbauteils auch mittels Wärmeleitung, mittels Konvektion oder elektrisch mittels Induktion oder elektrischem Widerstand sowie mittels einer Kombination aller oder einiger dieser Methoden aufgeheizt werden. Für die Aufheizung mittels Wärmeleitung kann eine Fläche an entsprechender Stelle in einer Heizvorrichtung vorgesehen werden, die mit jedem der ein oder mehreren zweiten Bereiche des Stahlblechbauteils zumindest teilweise in Kontakt bringbar ist. Für die Aufheizung über Konvektion können die ein oder mehreren zweiten Bereiche des Stahlblechbauteils jeweils mit einem Gasstrom gezielt angeströmt werden, der eine Temperatur oberhalb der AC3-Temperatur des Stahlblechbauteils aufweist. Bei dem Gasstrom kann es sich um einen Gasstrom mit einer der Umgebungsluft entsprechenden Zusammensetzung handeln. Es kann aber auch ein anderes Gas, beispielsweise ein Inertgas, eingesetzt werden. Für die Aufheizung mittels Induktion kann an entsprechender Stelle der Heizvorrichtung eine Induktionsspule vorgesehen sein.

Eine Wärmebehandlungsvorrichtung weist einen Produktionsofen zur Aufheizung des Stahlblechbauteils auf eine Temperatur oberhalb der AC3-Temperatur und eine thermische Nachbehandlungsstation zum Aufprägen eines Temperaturprofils auf das Stahlblechbauteil auf, wobei dem Stahlblechbauteil in einem oder mehreren ersten Bereichen eine Temperatur unterhalb der AC3-Temperatur und in einem oder mehreren zweiten Bereichen eine Temperatur oberhalb der AC3-Temperatur aufprägbar ist. Dabei weist die Profiliervorrichtung eine Kühleinrichtung zur Kühlung der ein oder mehreren ersten Bereiche sowie eine Heizvorrichtung zur Beheizung der ein oder mehreren zweiten Bereiche des Stahlblechbauteils auf. Dabei hat es sich als vorteilhaft erwiesen, wenn die Kühleinrichtung ein Gebläse für einen Gasstrom und/oder eine wärmestrahlungsabsorbierende Fläche und/oder eine Fläche, die zumindest mit einem Teil der ein oder mehreren ersten Bereiche des Stahlblechbauteils in Kontakt bringbar ist, aufweist.

Weiterhin hat es sich als vorteilhaft erwiesen, wenn die Heizvorrichtung eine Wärmestrahlungsvorrichtung und/oder eine mit zumindest einem Teil der ein oder mehreren zweiten Bereiche in Kontakt bringbare Fläche und/oder eine Gebläsevorrichtung zur Erzeugung eines Gasstroms und/oder eine Induktionsspule aufweist.

In einer vorteilhaften Ausführungsform weist die Wärmebehandlungsvorrichtung eine Trennvorrichtung zur thermischen Trennung des ersten Bereichs vom zweiten Bereich des Stahlblechbauteils auf. Geeignete Ausführungsformen der Trennvorrichtung sind dabei dem Fachmann aus dem Stand der Technik geläufig.

In einer weiteren vorteilhaften Ausführungsform weist die Wärmebehandlungsvorrichtung eine Handlingvorrichtung auf, die zwischen dem Produktionsofen und der thermischen Nachbehandlungsstation angeordnet ist und die dazu ausgelegt ist, das Stahlblechbauteil von dem Produktionsofen in die thermische Nachbehandlungsstation zu verbringen. Die Handlingvorrichtung kann beispielsweise einen Industrieroboter aufweisen. Die Handlingvorrichtung bietet den Vorteil, dass die heißen Stahlblechbauteile gefahrlos bewegt werden können. Darüber hinaus ist es mit der Handlingvorrichtung möglich, die Transferzeiten der Stahlblechbauteile konstant zu halten, so dass der Gesamtprozess der Wärmebehandlung reproduzierbar abläuft. Weiterhin kann die Stahlblechplatine mit einer Handlingvorrichtung sehr genau und reproduzierbar in der Profiliervorrichtung positioniert werden, wodurch die Prozessqualität weiter maximiert wird.

Es hat sich als vorteilhaft herausgestellt, wenn die Wärmebehandlungsvorrichtung mehrere thermische Nachbehandlungsstationen aufweist. Durch die gleichzeitige Verwendung eines Produktionsofens mit entsprechender Kapazität kann durch die Verwendung mehrerer thermischer Nachbehandlungsstationen der Ausstoß der Wärmebehandlungsvorrichtung vergrößert werden.

Vorteilhafterweise ist in einer Ausführungsform ein Durchlaufofen oder ein Batchofen als Produktionsofen vorgesehen. Durchlauföfen weisen in der Regel eine große Kapazität auf und sind für die Massenproduktion besonders gut geeignet, da sie sich ohne großen Aufwand beschicken und betreiben lassen.

In einer weiteren vorteilhaften Ausführungsform ist ein gasbefeuerter oder elektrisch beheizter Produktionsofen vorgesehen. Die Gasbefeuerung ist in den meisten Fällen die wirtschaftlichste Art der Beheizung eines Produktionsofens.

Die thermische Nachbehandlungsvorrichtung kann in einer Ausführungsform ein Oberteil und ein Unterteil aufweisen, wobei das Oberteil gegenüber dem Unterteil bewegbar ist und wobei das Stahlblechbauteil zwischen Oberteil und Unterteil einspannbar ist. Das Oberteil und/oder das Unterteil weisen dabei erste und zweite Zonen auf, die auf unterschiedliche Temperaturen temperierbar sind.

Durch die Bewegbarkeit von Oberteil zu Unterteil ist es möglich, das Stahlblechbauteil in die thermische Nachbehandlungsstation einzulegen und anschließend Ober- und/oder Unterteil so nahe an das Stahlblechbauteil zu bringen, dass ein Wärmeübergang zwischen Ober- und Unterteil einerseits dem Stahlblechbauteil andererseits stattfindet. Dabei weisen Ober- und/oder Unterteil unterschiedlich temperierte erste und zweite Zonen auf, so dass den unterschiedlichen ersten und zweiten Bereichen des Stahlblechbauteils unterschiedliche Temperaturen aufprägbar sind.

In einer weiteren Ausführungsform steht das Stahlblechbauteil im eingespannten Zustand mit dem Oberteil und dem Unterteil zumindest partiell in Kontakt. Durch die Bewegbarkeit von Oberteil zu Unterteil ist es möglich, das Stahlblechbauteil in thermische Nachbehandlungsstation einzulegen und anschließend das Stahlblechbauteil zumindest teilweise in Kontakt mit dem Ober- und Unterteil zu bringen. Durch den Kontakt kommt es zum Wärmeaustausch durch Wärmeleitung zwischen den Flächen des Ober- beziehungsweise Unterteils mit dem Stahlblechbauteil.

In einer alternativen Ausführungsform kommt es zu keinem Kontakt zwischen Ober- und/oder Unterteil einerseits und dem Stahlblechbauteil. Durch die Bewegbarkeit von Oberteil zu Unterteil kommen Unter- und/oder Oberteil so nahe an das Stahlblechbauteil, dass ein effektiver Wärmeübergang durch Wärmestrahlung und/oder Konvektion stattfindet, bleiben aber von ihr beabstandet.

Werden beschichtete Stahlbleche verarbeitet, bei denen die Beschichtung wie beispielsweise bei AlSi-beschichteten Stahlblechen mit dem Substrat legiert, kann der temperatur- und zeitabhängige Diffussionsprozess der Beschichtung in das Substrat im Produktionsofen gestartet werden, während eine Restdiffusionszeit der thermischen Nachbehandlungsstation verbracht wird.

Mit der erfindungsgemäßen Verfahren und der Wärmebehandlungsvorrichtung kann Stahlblechbauteilen mit mehreren ersten und/oder zweiten Bereichen, die auch komplex geformt sein können, wirtschaftlich ein entsprechendes Temperaturprofil aufgeprägt werden, da die ersten und zweiten Zonen der thermischen Nachbehandlungsstation besser thermisch von einander trennbar sind und es zu einer trennschärferen Behandlung der ersten und zweiten Bereiche des Stahlblechbauteils kommt, als dies im Produktionsofen möglich ist. Das Oberteil und/oder das Unterteil kann eine ebene Kontaktfläche aufweisen. Diese Ausführungsform lässt sich vorteilhafterweise für die Wärmebehandlung von ebenen Stahlblechplatinen einsetzen.

In einer alternativen Ausführungsform weist das Oberteil und/oder das Unterteil eine im Raum gekrümmte Kontaktfläche auf. Vorteilhafterweise ist die Krümmung der Kontaktfläche beziehungsweise der Kontaktflächen der räumlichen Gestalt Stahlblechbauteils angepasst, wenn im Raum gekrümmte Stahlblechbauteile wärmebehandelt werden sollen.

In einer Ausführungsform ist zumindest eine der unterschiedlichen Zonen in dem Unter- beziehungsweise Oberteil flüssigkeitstemperiert. Über eine Flüssigkeitstemperierung lässt sich nicht nur Wärme zu-, sondern auch abführen, so dass die Zonen sowohl beheizt als auch gezielt gekühlt werden können. Als geeignete Flüssigkeiten können beispielsweise Wärmeträgeröle oder auch Salzschmelzen eingesetzt werden.

Alternativ oder in Kombination kann zumindest eine der Zonen auch elektrisch temperiert sein. Die Abkühlung einer Zone geschieht dabei durch das langsame Auskühlen gegen die Umgebung, wobei diese Zone in diesem Fall nicht geheizt wird. Vorteilhafterweise sollte eine solche Zone auch nicht gegen die Umgebung wärmeisoliert sein. Dabei kann die elektrische Beheizung beispielsweise über Induktion oder elektrischen Widerstand realisiert werden.

In einer anderen Ausführungsform ist zumindest eine der Zonen gasbeheizbar. Gas kann für die Beheizung des Produktionsofens bereits zur Verfügung stehen, so dass kein zusätzlicher Aufwand für die Gasbeheizung aufzuwenden ist. Eine Gasbeheizung kann wirtschaftlicher sein als eine elektrische Beheizung.

Die unterschiedliche Temperierungsartenkönnen auch miteinander kombiniert werden. Beispielsweise kann eine Zone elektrisch beheizbar sein, während eine andere flüssigkeitstemperiert ist. Die elektrische Heizung hat den Vorteil des schnellen Ansprechens, während die Flüssigkeitstemperierung den Vorteil der gezielten Kühlmöglichkeit bietet. Müssen bestimmte Zonen geheizt und gleichzeitige andere Zonen gekühlt werden, bietet eine solche Ausführungsform besonders große Vorteile.

Mindestens eine der Zonen von Unter- und/oder Oberteil kann gegenüber einer anderen der Zonen im Unter- und/oder Oberteil thermisch isoliert sein. Die Isolation kann dabei aus einer eingebrachten Zwischenschicht beispielsweise aus einem duroplastischen Kunststoff oder aus einem keramischen Material bestehen. Es ist aber auch alternativ oder zusätzlich möglich, einen Spalt zur Isolation zwischen den Zonen vorzusehen. Dieser Spalt kann im einfachsten Fall mit Luft gefüllt sein. Eine größere Isolationswirkung wird allerdings mit einem Spalt erreicht, in dem ein Unterdruck herrscht.

Darüber hinaus kann die thermische Nachbehandlungsstationen einen produktspezifischen Adapter aufweist. Dieser Adapter kann beispielsweise als Anschlag für das Stahlblechbauteil ausgelegt sein, so dass das Stahlblechbauteil mit großer Reproduktionsgenauigkeit in die thermische Nachbehandlungsstation eingelegt werden kann. Dies ist zur Qualitätserhöhung besonders wichtig, wenn das Stahlblechbauteil kleine erste Bereiche aufweisen soll, die im fertigen Bauteil eine große Duktilität aufweisen sollen, wie es beispielsweise bei Stahlblechkarosserieteilen für die Automobilindustrie der Fall ist, die in folgenden Fertigungsschritten punktgeschweißt werden. Die Punktschweißstellen sollten üblicherweise eine große Duktilität aufweisen, während in vielen Anwendungsfällen das sie umgebende Material eine große Härte aufweisen sollte. Durch einen geeigneten Anschlag wird die Positionsgenauigkeit des Stahlblechbauteils in der thermischen Nachbehandlungsstation erhöht, wodurch auch die Positionsgenauigkeit der Bereiche unterschiedlicher Temperatur in dem Stahlblechbauteil erhöht wird.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
Fig. 1 eine erfindungsgemäße Wärmebehandlungsvorrichtung in einer Draufsicht
Fig. 2 eine erfindungsgemäße thermische Nachbehandlungsstation in einem Seitenschnitt
Fig. 3 das Unterteil einer erfindungsgemäßen thermischen Nachbehandlungsstation mit eingelegtem Stahlblechbauteil in einer Draufsicht
Fig.4 ein Beispiel eines anderen Stahlblechbauteils in Draufsicht nach Ausführung des erfindungsgemäßen Verfahrens

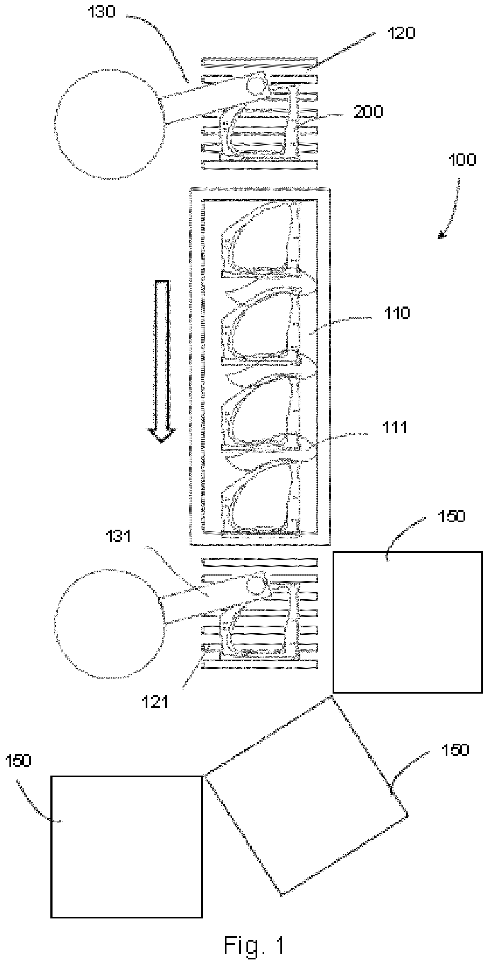

Fig. 1 zeigt eine Wärmebehandlungsvorrichtung 100 in einer Draufsicht. Ein Stahlblechbauteil 200 wird von einer ersten Handlingvorrichtung 130 auf einem Einlauftisch 120 der Wärmebehandlungsvorrichtung 100 bereit gelegt. Von dem Einlauftisch 120 gelangen Stahlblechbauteile 200 in den als Durchlaufofen ausgeführten Produktionsofen 110 und durchlaufen ihn in Pfeilrichtung, wobei sich ihre Temperatur auf eine Temperatur oberhalb der AC3-Temperatur erhöht. Der Produktionsofen ist mit Gasbrennern, deren Flammen 111 in den Ofenraum hinein wirken, beheizt. In Durchlaufrichtung gesehen hinter dem Produktionsofen 110 befindet sich ein Auslauftisch 121, auf den die aufgeheizten Stahlblechbauteile 200 nach Durchlaufen des Produktionsofens 110 gelangen. Von dort werden die Stahlblechbauteile 200 von einer zweiten Handlingvorrichtung 131 in eine von drei thermischen Nachbehandlungsvorrichtungen 150 transferiert. Dabei kühlen die Stahlblechbauteile 200 an der Umgebungsluft durch natürliche Konvektion auf ein Temperaturniveau unterhalb ihrer AC3-Temperatur ab.

In der Figur sind drei thermische Nachbehandlungsstationen 150 gezeigt, die nebeneinander in einem Kreisbogen angeordnet sind. Durch diese Anordnung ist sichergestellt, dass alle drei thermischen Nachbehandlungsstationen 150 durch die zweite Handlingvorrichtung 131 beschickt werden können. Es können auch mehr oder weniger thermische Nachbehandlungsstationen 150 vorgesehen sein. Die Anzahl der vorteilhafterweise vorzusehenden thermischen Nachbehandlungsstationen 150 hängt von dem Verhältnis der Zykluszeiten des Produktionsofens 110 und der thermischen Nachbehandlungsstation150 ab, wobei die Zykluszeiten von den zu erreichenden Temperaturen abhängig und somit unter anderem abhängig sind von dem verarbeiteten Material des Stahlblechbauteils 200. Darüber hinaus ist auch eine andere Anordnung der mehreren thermischen Nachbehandlungsstationen 150 möglich. Denkbar ist beispielsweise eine Anordnung, bei der mehrere thermische Nachbehandlungsstationen 150 vertikal übereinander angeordnet sind.

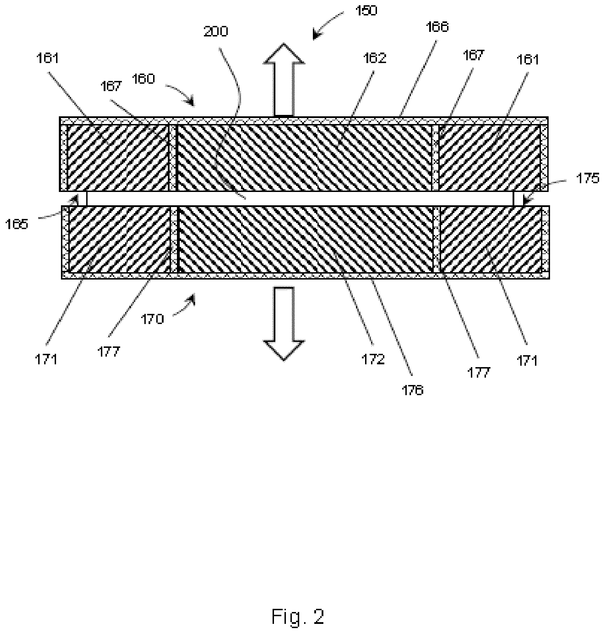

Fig. 2 zeigt eine thermische Nachbehandlungsstation 150 in einem Seitenschnitt. Die thermische Nachbehandlungsstation weist ein Oberteil 160 und Unterteil 170 auf, wobei Oberteil 160 und Unterteil 170 sind vertikal gegeneinander beweglich, wie die Pfeile andeuten sollen. Werden Oberteil 160 und Unterteil 170 vertikal voneinander weg bewegt, wird die thermische Nachbehandlungsstation 150 geöffnet und ein Stahlblechbauteil 200 kann zwischen die beiden Teile 160, 170 eingelegt werden. In der Figur ist die thermische Nachbehandlungsstation 150 in geschlossenen Zustand gezeigt, wobei ein Stahlblechbauteil 200 zwischen Oberteil 160 und Unterteil 170 eingespannt ist. Das Oberteil 160 weist erste Zonen 161, die eine Temperatur unterhalb der AC3-Temperatur aufweist, und eine zweite Zone 162, die eine Temperatur oberhalb der AC3-Temperatur aufweist, auf. Ebenso weist das Unterteil 170 eine erste Zone 171, die eine Temperatur unterhalb der AC3-Temperatur aufweisen, und eine zweite Zone 172, die eine Temperatur oberhalb der AC3-Temperatur aufweist, auf. Die Zonen 161, 162 im Oberteil 160 sind durch eine thermische Isolation 167 voneinander getrennt. Ebenso sind die Zonen 171, 172 im Oberteil 170 durch eine thermische Isolation 177 voneinander getrennt. Zusätzlich weisen die äußeren Flächen von Oberteil 160 und Unterteil 170 jeweils eine Isolationsschicht 166, 176 auf. Diese Isolationen dienen der thermischen Trennung und können aus geeigneten duroplastischen oder keramischen Materialien bestehen. Als thermische Trennung zwischen den ersten Zonen 161, 171 und den zweiten Zonen 162, 172 kommen auch jeweils zwischen den Zonen angeordnete Luftspalte oder evakuierte Zwischenräume, in denen ein Unterdruck bis zum Vakuum herrscht, in Betracht.

In der Figur sind jeweils ebene Kontaktflächen 165, 175 von Oberteil 160 und Unterteil 170 gezeigt. Solche ebenen Kontaktflächen 165, 175 bieten sich für die Wärmebehandlung von im Wesentlichen ebenen Stahlblechbauteilen 200 an. Sind die zu behandelnden Stahlblechbauteile 200 im Raum gekrümmt, können die Kontaktflächen 165, 175 einer solchen Krümmung angepasst werden, so dass auch sie im Raum gekrümmt ausgestaltet sein können.

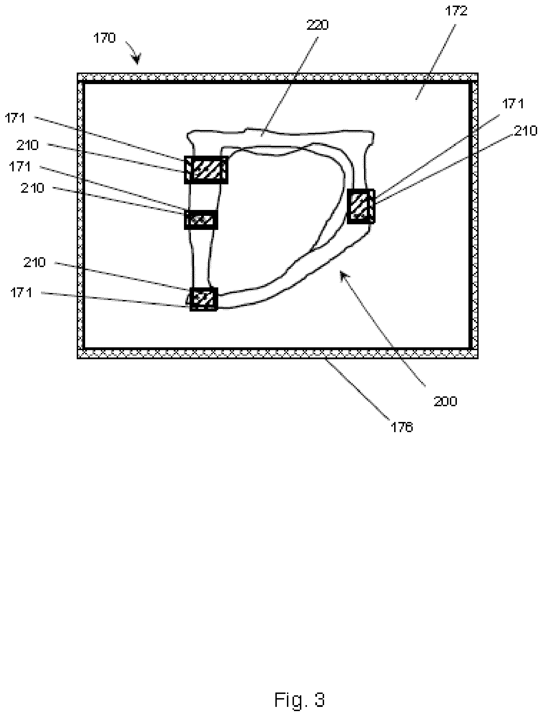

Fig. 3 zeigt das Unterteil 170 einer thermischen Nachbehandlungsstation 150 mit eingelegtem Stahlblechbauteil 200 in einer Draufsicht. Das Stahlblechbauteil 200 weist erste Bereiche 210 auf, die im späteren Fertigteil eine große Duktilität aufweisen sollen. Handelt es sich bei dem Stahlblechbauteil 200 um ein Fahrzeugkarosserieteil, kann es sich bei diesen ersten Bereichen 210 beispielsweise um die Bereiche handeln, an denen das spätere Fertigteil mit der restlichen Fahrzeugkarosserie mittels Punktschweißung verbunden wird. Diese ersten Bereiche 210 liegen auf ersten Zonen 171 des Unterteils 170 auf, die eine Temperatur unterhalb der AC3-Temperatur, beispielsweise eine Temperatur von circa 600°C, aufweisen. Zweite Bereiche 220 des Stahlblechbauteils 200, die im späteren Fertigteil eine hohe Härte aufweisen sollen, liegen demgegenüber auf zweiten Zonen 172 des Unterteils 170 auf, die eine Temperatur oberhalb der AC3-Temperatur, beispielsweise 900°C, aufweisen. Die ersten Zonen 171 sind von den zweiten Zonen 172 thermisch isoliert (in der Figur nicht dargestellt). Durch die thermische Isolation 177 der Zonen 171, 172 gegeneinander wird die thermische Trennung der Zonen 171, 172 gegeneinander maximiert, wodurch sich auch kleinteilige unterschiedliche erste und zweite Bereiche 210, 220 in dem Stahlblechbauteil 200 verwirklichen lassen. Weiterhin weist das Unterteil 170 auf seinen Außenflächen eine thermische Isolierung 176 auf.

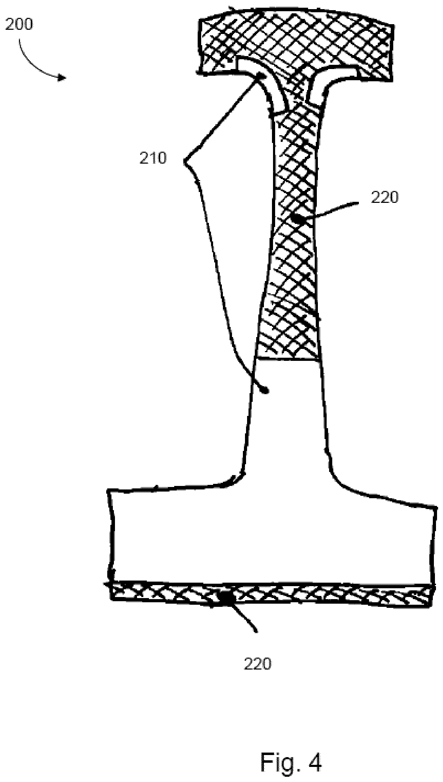

Fig.4 zeigt ein Beispiel eines anderen Stahlblechbauteils 200, hier eine B-Säule 200 für Fahrzeuge in Draufsicht nach Ausführung des erfindungsgemäßen Verfahrens. Als B-Säule wird die Verbindung zwischen Fahrzeugboden und Fahrzeugdach in der Mitte der Fahrgastzelle bezeichnet. Den Säulen in Fahrzeug, damit auch der B-Säule, kommt im Falle eines Unfalls mit Überschlagen des Fahrzeugs die lebenserhaltende Aufgabe zu, die Fahrgastzelle gegen vertikale Verformung zu stabilisieren. Sehr viel wichtiger ist die Aufnahme von Kräften beim Seitenaufprall, damit die Fahrzeuginsassen unversehrt bleiben. Um diese Aufgabe gewährleiten zu können, weist die B-Säule 200 erste Bereiche 210 mit großer Duktilität und zweite Bereiche 220 mit großer Härte auf. Die B-Säule 200 wurde mittels des erfindungsgemäßen Verfahrens in der Wärmebehandlungsvorrichtung mit den hier gezeigten ersten Bereichen 210 und zweite Bereiche 220 versehen, wobei die zweiten Bereiche 220 zusätzlich vergütet wurden.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung, wie in den Ansprüchen angegeben, umfasst.

### Bezugszeichenliste:

- 100: Wärmebehandlungsvorrichtung
- 110: Produktionsofen
- 111: Flamme
- 120: Einlauftisch
- 121: Auslauftisch
- 130: erste Handlingvorrichtung
- 131: zweite Handlingvorrichtung
- 150: thermische Nachbehandlungsstation
- 151: Kühleinrichtung
- 152: Heizvorrichtung
- 160: Oberteil
- 161: erste Zone innerhalb des Oberteils
- 162: zweite Zone innerhalb des Oberteils
- 165: Kontaktfläche des Oberteils
- 166: Äußere Isolation des Oberteils
- 167: Zonenisolation im Oberteil
- 170: Unterteil
- 171: erste Zone innerhalb des Unterteils
- 172: zweite Zone innerhalb des Unterteils
- 175: Kontaktfläche des Unterteils
- 176: Äußere Isolation des Unterteils
- 177: Zonenisolation im Unterteil
- 200: Stahlblechbauteil
- 210: erster Bereich
- 220: zweiter Bereich
- 300: Handlingvorrichtung

## Patentansprüche

1. Verfahren zur Aufprägung eines Temperaturprofils auf ein Stahlblechbauteil (200), wobei dem Stahlblechbauteil (200) in einem oder mehreren ersten Bereichen (210) eine Temperatur unterhalb der AC3-Temperatur und ein einem oder mehreren zweiten Bereich (220) eine Temperatur oberhalb der AC3-Temperatur aufprägbar ist, in dem das Stahlblechbauteil (200) zunächst in einem Produktionsofen (110) auf eine Temperatur oberhalb der AC3-Temperatur aufgeheizt wird, das Stahlblechbauteil (200) anschließend in eine thermische Nachbehandlungsstation (150) transferiert wird, wobei es während des Transfers auf eine Temperatur unterhalb der AC3-Temperatur abkühlt, und in der Nachbehandlungsstation (150) die ein oder mehreren ersten Bereiche (210) des Stahlblechbauteils (200) weiter abgekühlt werden, während die ein oder mehreren zweiten Bereiche (220) des Stahlblechbauteils (200) auf eine Temperatur oberhalb der AC3-Temperatur aufgeheizt werden.

2. Verfahren nach Anspruch 1,
**dadurch gekennzeichnet,**
**dass** die ein oder mehreren ersten Bereiche (210) des Stahlblechbauteils (200) in der thermischen Nachbehandlungsstation (150) mittels Konvektion und/oder mittels Strahlung und/oder mittels Wärmeleitung gekühlt werden.

3. Verfahren nach einem der vorherigen Ansprüche,
**dadurch gekennzeichnet,**
**dass** die ein oder mehreren zweiten Bereiche (220) des Stahlblechbauteils (200) in der thermischen Nachbehandlungsstation (150) mittels Strahlung und/oder mittels Wärmeleitung und/oder mittels Konvektion und/oder elektrisch mittels Induktion und/oder Widerstand aufgeheizt werden.

## Claims

1. Method for imparting a temperature profile to a sheet steel component (200), wherein a temperature can be imparted to the sheet steel component (200) that is below the AC3 temperature in one or more first regions (210) and above the AC3 temperature in one or more second regions (220), in which method the sheet steel component (200) is first heated to a temperature above the AC3 temperature in a production furnace (110) and the sheet steel component (200) is then transferred to a thermal post-treatment station (150), wherein said component cools to a temperature below the AC3 temperature during the transfer and, in the post-treatment station (150), the one or more first regions (210) of the sheet steel component (200) are cooled further while the one or more second regions (220) of the sheet steel component (200) are heated to a temperature above the AC3 temperature.

2. Method according to claim 1, **characterized in that** the one or more first regions (210) of the sheet steel component (200) are cooled in the thermal post-treatment station (150) by means of convection and/or by means of radiation and/or by means of heat conduction.

3. Method according to either of the preceding claims, **characterized in that** the one or more second regions (220) of the sheet steel component (200) are heated in the thermal post-treatment station (150) by means of radiation and/or by means of heat conduction and/or by means of convection and/or electrically by means of induction and/or resistance.

## Revendications

1. Procédé d'application d'un profil de température à un composant de tôle d'acier (200), une température inférieure à la température AC3 pouvant être appliquée au composant de tôle d'acier (200) dans une ou plusieurs premières zones (210) et une température supérieure à la température AC3 pouvant être appliquée au composant de tôle d'acier (200) dans une ou plusieurs secondes zones (220),
le composant de tôle d'acier (200) étant d'abord chauffé dans un four de production (110) à une température supérieure à la température AC3, puis le composant de tôle d'acier (200) étant transféré dans une station de post-traitement thermique (150), le composant de tôle d'acier se refroidissant à une température inférieure à la température AC3 pendant le transfert, et l'une ou les plusieurs premières zones (210) du composant de tôle d'acier (200) étant encore refroidies dans la station de post-traitement (150) pendant que l'une ou les plusieurs secondes zones (220) du composant de tôle d'acier (200) sont chauffées à une température supérieure à la température AC3.

2. Procédé selon la revendication 1,
**caractérisé**
**en ce que** l'une ou les plusieurs premières zones (210) du composant de tôle d'acier (200) sont refroidies dans la station de post-traitement thermique (150) par convection et/ou par rayonnement et/ou par conduction thermique.

3. Procédé selon l'une des revendications précédentes,
**caractérisé**
**en ce que** l'une ou les plusieurs secondes zones (220) du composant de tôle d'acier (200) sont chauffées dans la station de post-traitement thermique (150) par rayonnement et/ou par conduction thermique et/ou par convection et/ou, électriquement, par induction et/ou résistance.
